# EUROPEAN PATENT APPLICATION

(11) **EP 2 555 493 A1**
(43) Date of publication of application: **06.02.2013**
(21) Application number: 11176759.6
(22) Date of filing: 05.08.2011
(51) Int. Cl.: H04M 1/02, H05K 5/02

(54) **Cover plate with integrated retention features**

(71) Applicant: Research In Motion Limited, Waterloo, ON N2L 3W8 (CA)
(72) Inventor: Aldrich III, James Nelson, Rolling Meadows, Illinois 60008 (US); Finney, Benjamin Michael, Rolling Meadows, Illinois 60008 (US); Kudrna, Paul John, Rolling Meadows, Illinois 60008 (US); Kosanovich, Peter P., Rolling Meadows, Illinois 60008 (US)
(74) Representative: Noble, Nicholas

(57) **Abstract**

A translucent or transparent cover plate has an inner side and an outer side. A decoration portion bearing a decoration or art work is attached to the inner side of the cover plate. The decoration or art work is visible through the outer side of cover plate. Retention features can be attached or joined to the cover plate to enable the cover plate to be attached to an electronic device.

## Description

### FIELD

The present disclosure relates generally to mobile electronic devices. More specifically, enabling implementations relate to mobile electronic devices having a removable battery cover connected to a base via a door retention apparatus.

Mobile electronic devices are becoming more prevalent and more advanced. Mobile electronic devices can include, but are not limited to, cellular telephones, smart telephones, wireless personal digital assistants (PDAs) and the like, and laptop computers with wireless 802.11 or Bluetooth capabilities. These devices can run on a wide variety of networks from data-only networks such as Mobitex® and DataTAC® networks to complex voice and data networks such as GSM/GPRS, CDMA, EDGE, UMTS and CDMA2000 networks. Electronic devices can house various components. Components can be covered or shielded by a cover plate having one or more retention features to retain the cover plate within an electronic device.

### BACKGROUND

As the demands of consumers of electronic devices increase some consumers prefer a cover plate which bears one or more decorations. Some consumers may prefer a decorated appearance which has a certain level of sheen. However, providing or producing an appropriately decorated cover plate which comprises one or more retention features, without impairing the decorative aspects of a device, can be difficult.

Disclosed herein are devices including cover plates implemented according to one or more aspects of the technology.

### BRIEF DESCRIPTION OF THE DRAWINGS

Figure 1 illustrates a block diagram of an electronic device in a communication network in accordance with an example implementation of the technology;

Figure 2 illustrates a front view of an electronic device within the technology;

Figure 3 illustrates a rear view of an electronic device within the technology;

Figure 4 illustrates cover plate within the technology;

Figure 5 illustrates an alternative implementation of a cover plate within the technology;

Figure 6 illustrates an exploded view of an implementation of a cover plate within the technology;

Figure 7 illustrates a cross-section of a cover plate as illustrated mobile electronic device as depicted in Figure 5;

Figure 8 illustrates a further cross-section of a cover plate as illustrated in Figure 5;

Figure 9 illustrates a further cross-section of a cover plate as illustrated in Figure 5;

Figure 10 illustrates a further cross-section of a cover plate as illustrated in Figure 5;

Figure 11 illustrates a partially exploded rear view of a mobile electronic device within the technology;

Figure 12 illustrates a rear view of an electronic device within the technology;

Figure 13 illustrates an implementation of a decoration portion within the technology;

Figure 14 illustrates a cross section of cover plate within the technology; and

Figure 15 illustrates a method in accordance with the technology.

### DETAILED DESCRIPTION

As will be appreciated for simplicity and clarity of illustration, where appropriate, reference numerals have been repeated among the different figures to indicate corresponding or analogous elements. In addition, numerous specific details are set forth in order to provide a thorough understanding of the implementations described herein. However, it will be understood that the implementations described herein can be practiced without these specific details. In other instances, methods, procedures and components have not been described in detail so as not to obscure the related relevant feature being described. Also, the description is not to be considered as limiting the scope of the implementations described herein.

The technology includes methods, uses and implementations of one or more releasable cover plates or covers or doors in a mobile electronic device.

Several definitions that apply throughout the disclosure of the technology will now be presented. The word "coupled" is defined as connected, whether directly or indirectly through intervening components, and is not necessarily limited to physical connections. The term "communicatively coupled" is defined as connected, whether directly or indirectly through intervening components, is not necessarily limited to a physical connection, and allows for the transfer of data. The term "electronic device" is defined as any electronic device that is capable of at least accepting information entries from a user and includes the device's own power source. A "wireless communication" includes communication that occurs without wires using electromagnetic radiation. The term "memory" refers to transitory memory and non-transitory memory. For example, non-transitory memory can be implemented as Random Access Memory (RAM), Read-Only Memory (ROM), flash, ferromagnetic, phase-change memory, and other non-transitory memory technologies. "Coupled" or "mechanically coupled" refers to a relationship between items which may have one or more intermediate parts or items to which they are connected. A "mold" is defined as a component that contains one or more cavities or channels for accepting and giving a particular shape to something in a molten state. "Mold" can refer to a hollowed-out block that is to be filled with a liquid such as plastic, glass, or metal. The liquid hardens or sets inside the mold, adopting its shape. A plate cover can be made from a mold.

"Injection molding" can refer to a manufacturing process for producing parts from both thermoplastic and thermosetting plastic materials. In injection molding, material is fed into a heated barrel, mixed, and forced into a mold cavity where it cools and hardens to the configuration of the mold cavity. A mold can have two primary components, an injection mold and an ejector mold. Plastic resin enters the mold through a sprue in the injection mold, whereby a sprue bushing is sealed against a nozzle of the injection barrel of the molding machine. The sprue can enable molten plastic to flow from the barrel into the mold, which can also be called a cavity. The sprue bushing directs the molten plastic into the cavity through channels that are machined into the faces of the injection mold and the ejector mold.

The terms "metal" or "metal component" are defined as any element or alloy that readily becomes a cation and forms ionic bonds, having relatively free valence electrons and that is able to conduct electricity. The term "image" is defined as a physical likeness or representation of a person, animal or thing that is capable of being displayed on a plastic surface. The terms "plastic" or "plastic component" mean any substance made of one or more polymers that is capable of being shaped or molded when subjected to heat and pressure. A "nozzle" is defined as a component that has an opening and that directs the flow of a fluid. The term "housing" is defined as any structure that is designed to cover or protect any component. The phrases "embedded in," "embedded within" and "integrated with" are defined as a state in which one element is at least partially surrounded by another element with at least one surface of the partially surrounded element exposed.

As noted earlier, it is desirable to improve the appearance of, for example, mobile devices that are constructed of plastic components that are externally exposed to a user. One method of doing so is to increase the sheen or shine associated with such plastic surfaces. To do so, these surfaces may be painted; however, this process is inefficient because any exposed metal components must be masked prior to the paint being applied. The implementation presented herein overcome at least one of these disadvantages.

Reference will now be made in detail to implementations of the technology. Each example is provided by way of explanation of the technology only, not as a limitation of the technology. It will be apparent to that various modifications and variations can be made in the present technology. For instance, features described as part of one implementation of the technology can be used on another implementation to yield a still further implementation. Thus, it is intended that the present technology cover such modifications and variations that come within the scope of the technology.

In at least one implementation of the technology, retention feature(s) are integrated into a part which is decorated on a second or inner surface of a cover plate, wherein the second or inner the surface of a part is not the area located on the outer-most surface of a device. The cover plate may be transparent or translucent. After one or more retention features are integrated into a part such as a cover plate, the retention feature(s) will be hidden from the outer surface of a device when the device is in a closed configuration.

In at least one implementation, in order to give a deep gloss appearance to a part, the plastic resin, from which the part may be made, possibly by a molding process, can be clear or have a level of transparency. A decoration can be placed or inserted on the second or inner surface of the part, such as a cover plate, such that the decoration will be visible through the plastic, thus yielding a sheened or glossy appearance.

According to the technology, decoration can be applied to the inner or second surface in many different ways from painting to inserting an ink-decorated plastic film into a molding tool (IML) or ink transfer device.

For some parts, it may be beneficial to include one or more retention or snap features within the part structure. In that instance, according to the technology, the retention features are placed on the inner or second surface. However, due to adhesion and cosmetic issues, retention features cannot be molded on top of the decorated surface without possibly damaging portions of the decoration features.

In at least one implementation of the technology a two-shot molding process or two-stage or an overmold molding process is used to mold retention features outside of the decorated portion of the part. Shot number one, or molded part number one, can be the main portion of the part, such as a cover plate, and does not include retention features and does include decoration on its inner or second surface. Shot number two can be a thin band dimensioned to fit around the perimeter of the main portion of the part. Shot number two does include retention features. Shot number two can be molded in transparent or opaque colored resin. Shot number one can be molded first and shot number two molded second or shot number one can be molded second and shot number two can be molded first within the technology within either a two shot molding process and an over-mold processes.

Within the technology, shot number one can be decorated by an in-mold process or a post-process such as painting. This approach enables retention features to be integrated into a part, as well as hang over the decorated surface if desired, without causing undesired cosmetic defects. Although it is possible to attach or join retention features to a part such as a cover plate using adhesive methods, heat-staking, and ultrasonically welding attached retention features, those methods have negative cosmetic effects to a decoration portion, or require a level of precision to obviate against such negative cosmetic effects as to be expensive.

Within the technology, one or more retention features can be integrated with a cover plate in a separate step, and consequently negative cosmetic effects can thereby be avoided.

Within the technology, in the case of a part wherein retention or snap features are required, the retention features are placed on the inner or second surface. Retention features are not molded on top of the decorated surface due to adhesion and cosmetic issues that would could be visible on the outer surface of the part. As intimated above, at least one problem solved by implementations of the technology is the problem of integrating retention feature(s) to a part which is decorated on a second surface while configuring the part to have the retention feature(s) hidden from the outer surface of the part, without impairing the decorated area.

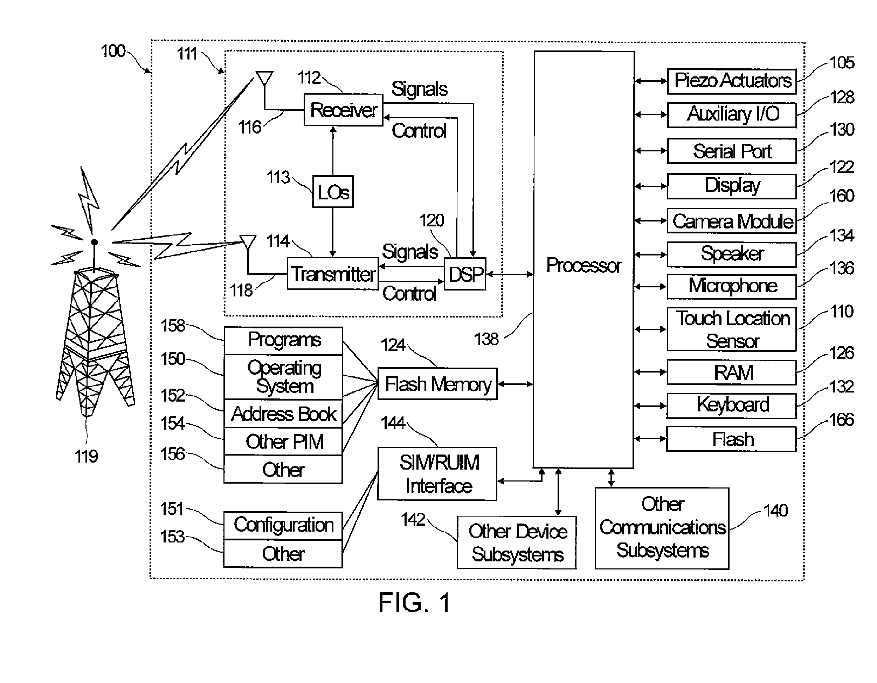

Referring to Figure 1, an example electronic device 100 can be communicatively coupled to a wireless network 219. Figure 1 and the other figures illustrate non-limiting examples, and modifications may be necessary to make an electronic device 100 work in particular network environments. In the illustrated implementation, the electronic device 100 is a smart phone. In other implementations, however, an electronic device 100 can be a personal digital assistant (PDA), laptop computer, desktop computer, server, or other electronic device capable of sending and receiving electronic messages.

With further reference to Figure 1, a block diagram of a electronic device 100 in a communication network 119 in accordance with an exemplary implementation is illustrated. As shown, the electronic device 100 can include a processor that can be a microprocessor 138 that controls the operation of the electronic device 100, such as facilitating communications, providing a graphical user interface, executing programs, and so forth. A communication subsystem 111 performs communication transmission and reception with the wireless network 119. The microprocessor 138 can be coupled to piezoelectric actuators 105 housed within the electronic device 100. The microprocessor 138 further can be coupled with an auxiliary input/output (I/O) subsystem 128 that can be coupled to the electronic device 100. Additionally, in at least one implementation, the microprocessor 138 can be coupled to a serial port (for example, a Universal Serial Bus port) 130 that facilitates communication with other devices or systems via the serial port 130. A display 122 can be communicatively coupled to the microprocessor 138 to facilitate display of information to an operator of the electronic device 100. Piezoelectric actuators 105 can be housed proximate the display 122 and can enable the electronic device 100 to transmit data in conjunction with, in complement to, or instead of, information transmitted through the display 122. When the electronic device 100 is equipped with a keyboard 132, which can be physical or virtual (for example, displayed), the keyboard 132 can be communicatively coupled to the microprocessor 138. The electronic device 100 can include one or more speakers 134 and one or more microphones 136, which can advantageously be communicatively coupled to the microprocessor 138 and discussed in further detail below. Other communication subsystems 140 and other electronic device subsystems 142 are generally indicated as communicatively coupled with the microprocessor 138, An example of a communication subsystem 240 is a short-range communication system such as a BLUETOOTH® communication module or a WI-FI® communication module (a communication module in compliance with IEEE 802.11b) and associated circuits and components. Additionally, the microprocessor 138 can perform operating system functions and executes programs or software applications on the electronic device 100. In some implementations, not all of the above components are included in the electronic device 100. The auxiliary I/O subsystem 128 can take the form of one or more different navigation tools (multi-directional or single-directional), external display devices such as keyboards, and other subsystems capable of providing input or receiving output from the electronic device 100.

The auxiliary I/O subsystem 128 can take the form of a variety of different navigation tools (multi-directional or single-directional) such as an optical navigation module or tool. In other implementations, a trackball, thumbwheel, a navigation pad, a joystick, touch-sensitive interface, or other I/O interface can be used. The navigation tool can be located on a front surface of the electronic device 100 or may be located on any exterior surface of the electronic device 100. Other auxiliary I/O subsystems can include external display devices and externally connected keyboards (not shown). While the above examples have been provided in relation to the auxiliary I/O subsystem 128, other subsystems capable of providing input or receiving output from the electronic device 100 are considered within the scope of the technology. Additionally, other keys may be placed along the side of the electronic device 100 to function as escape keys, volume control keys, scrolling keys, power switches, or user programmable keys, and may likewise be programmed accordingly. In at least one implementation of the technology, an electronic device can comprise a camera module 160 communicatively coupled to the processor 138. In at least one implementation of the technology, an electronic device can comprise a flash 166 communicatively coupled to the processor 138 for use in conjunction with the camera module 160.

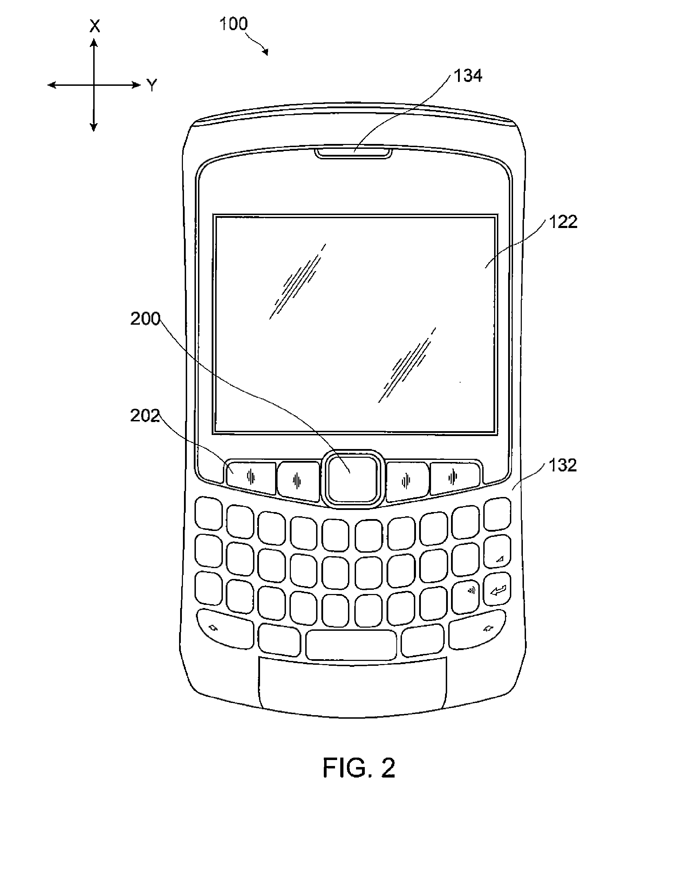

As may be appreciated from Figure 2, the electronic device 100 can have a display 122 located above the keyboard 132 constituting a user input and suitable for accommodating textual input to the electronic device 100. The front face of an electronic device 100 can have a navigation row 202. As shown, an electronic device 100 can be of a unibody construction, also known as a "candy-bar" design. In alternate implementations, an electronic device 100 can be a "clamshell" or a "slider" design.

As described above, an electronic device 100 can include the auxiliary input 128 that acts as a cursor navigation tool 200 and which can be also exteriorly located upon the front face of the electronic device 100. The front face location of the navigation tool can allow the navigation tool to be easily thumb-actuable or finger-actuable like the keys of the keyboard 132. An implementation provides the navigation tool in the form of the optical navigation module having one or more sensors, such as a capacitive sensor, optical sensor, or both, which can be utilized to instruct two-dimensional or three-dimensional screen cursor movement in substantially any direction, as well as act as an actuator when the optical navigation module is depressed like a button. The placement of the navigation tool 200 may be above the keyboard 132 and below the display 122; here, it can avoid interference during keyboarding and does not block the operator's view of the display screen 122 during use, for example, as shown in Figure 2. The navigation tool 200 can reside within a navigation row 202, as shown.

The electronic device 100 can be configured to send and receive messages. As will be described in greater detail below, the device 100 can be enabled to actuate one or more actuators 105 upon the sending or receiving of email or both sending and receiving email. The electronic device 100 includes a body or housing which can, in some implementations, be configured to be held in one hand by an operator of the electronic device 100 during text entry. The display 122 is included which is located on the front face of the body and upon which information is displayed to the operator during text entry. The electronic device 100 can also be configured to send and receive voice communications such as electronic telephone calls. As will be described in greater detail below, a device 100 can be configured to actuate one or more actuators 105 upon the sending telephone calls or receiving telephone calls or both sending and receiving telephone calls. The electronic device 100 can also include a camera 121 to allow the user to take electronic photographs which can be referred to as photos or pictures.

The electronic device 100 can be equipped with components to enable operation of various programs, as shown in Figure 1. As shown, the memory 124 can provide storage for the operating system 150, device programs 158, data, and the like. The memory can be flash memory. The operating system 150 can be generally configured to manage other programs 158 that are also stored in memory 124 and executable on the processor 138. The operating system 150 can handle requests for services made by programs 158 through predefined program 158 interfaces. More specifically, the operating system 150 can typically determine the order in which multiple programs 158 are executed on the processor 138 and the execution time allotted for each program 158, manages the sharing of memory 124 among multiple programs 158, handles input and output to and from other device subsystems 142, and so forth. In addition, operators can interact directly with the operating system 150 through a user interface, typically including the keyboard 132 and display screen 122. The operating system 150, programs 158, data, and other information can be stored in memory 124, RAM 126, read-only memory (ROM), or another suitable storage element (not shown). An address book 152, personal information manager (PIM) 154, and other information 156 can also be stored.

The electronic device 100 can be enabled for two-way communication within voice, data, or voice and data communication systems. A Subscriber Identity Module (SIM) or Removable User Identity Module (RUIM) can be utilized to authorize communication with the communication network 119. A SIM/RUIM interface within the electronic device 100 can interface a SIM/RUIM card to the microprocessor 138 and facilitates removal or insertion of a SIM/RUIM card (not shown). The SIM/RUIM card within a SIM/RUIM Interface 144 features memory and can hold key configurations 151, and other information 153 such as identification and subscriber related information. The electronic device 100 can be equipped with an antenna 118 for transmitting signals to the communication network 119 and another antenna 116 for receiving communication from the communication network 119. Alternatively, a single antenna (not shown) can be utilized to transmit and receive signals. A communication subsystem 111 can include a transmitter 114 and receiver 112, one or more antennae 116, 118, local oscillators (LOs) 113, and a processing module 120 such as a digital signal processor (DSP) 120.

The electronic device 100 can include a touch-sensitive display or touchscreen 124 that includes one or more touch location sensors, an overlay, and a display 122, such as a liquid crystal display (LCD) or light emitting diode (LED) display, such as shown in Figure 2. The touch location sensor(s) can be a capacitive, resistive, infrared, surface acoustic wave (SAW), or other type of touch-sensitive sensor and can be integrated into the overlay. The overlay, or cover, can be comprised of laminated glass, plastic, or other suitable material(s) and is advantageously translucent or transparent. A touch, or touch contact, can be detected by a touchscreen and processed by the processor 138, for example, to determine a location of the touch. Touch location data can include the center of the area of contact or the entire area of contact for further processing. A touch may be detected from a contact member, such as a body part of a user, for example a finger or thumb, or other objects, for example a stylus, pen, or other pointer, depending on the nature of the touch location sensor.

Referring to Figure 2, a front view of an electronic device 100 in accordance with an exemplary implementation is illustrated. The electronic device 100 can house a POP having battery terminals connected to a battery housed within the device 100. As shown, the electronic device 100 can have a full QWERTY keyboard 132 or a reduced keyboard (not illustrated). Each key of the keyboard 132 can be associated with at least one indicia representing an alphabetic character, a numeral, or a command, (such as a space command, return command, or the like). The plurality of the keys having alphabetic characters can be arranged in a standard keyboard layout. This standard keyboard layout can be a QWERTY layout, a QZERTY layout, a QWERTZ layout, an AZERTY layout, a Dvorak layout, a Russian keyboard layout, a Chinese keyboard layout, or other similar layout. These standard layouts are provided by way of example and other similar standard layouts are considered within the scope of the technology. The keyboard layout can be based on the geographical region in which the handheld device 100 is intended for sale. In some examples, the keyboard can be interchangeable such that the user can switch between layouts. In other examples, the keyboard is a virtual keyboard provided on a touch screen display 122.

As will be appreciated from Figure 2, an exemplary mobile communication device 100 comprises a display 222 located above a keyboard 132 constituting a user input means that is suitable for accommodating textual input to the device 100. In some implementations, the keyboard 132 can be part of a touch screen display. The front face of the device 100 has a navigation row 202. As shown, the device 100 is of uni-body construction, also known as a "candy-bar" design, which can include or incorporate a cover plate with one or more integrated retention features.

The device 100 may include an auxiliary input that acts as a cursor navigation tool 200 and that may be also exteriorly located upon the front face of the device 100. The front face location of a cursor navigation tool 200 allows the tool to be thumb-actuable, e.g., like the keys of the keyboard 332. Some implementations of the technology provide the navigation tool 200 in the form of a trackball (not shown) that may be utilized to instruct two-dimensional screen cursor movement in substantially any direction, as well as act as an actuator when the trackball is depressed like a button. Other implementations can provide the navigation tool in the form of a trackpad, a touchpad, a pointing stick, joystick, graphics tablet, or combinations thereof. The placement of the navigation tool 200 can be above the keyboard 132 and below the display screen 122; here, it may avoid interference during keyboarding and does not block the operator's view of the display screen 322 during use.

The device 100 may be configured to send and receive messages. The device 100 includes a body which includes a base and battery hatch or door, that can, in some implementations, be configured to be held in one hand by an operator of the device 100 during text entry. A display 122 is included that is located on a front face of the body and upon which information is displayed to the operator, e.g., during text entry. The device 100 may also be configured to send and receive voice communications such as mobile telephone calls. The device 100 also can include a camera 302 to allow the device 100 to take electronic photographs that can be referred to as photos or pictures. Further, the device 100 can be configured to operate a web browser.

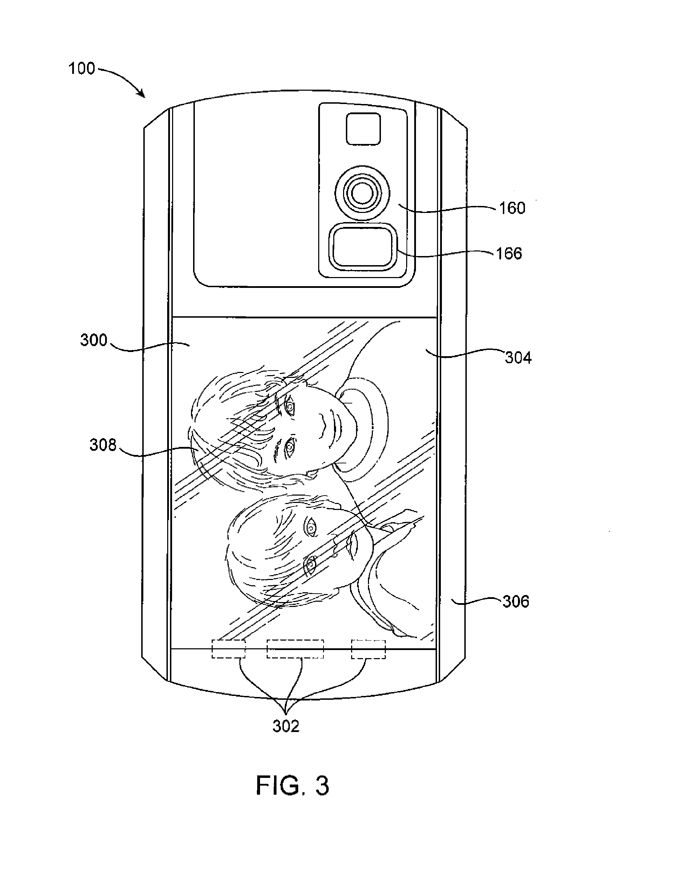

Figure 3 illustrates a rear view of an electronic device 100 within the technology. A cover plate 300 resides within the base 306 of a device 100 such as a mobile phone. In this case the cover plate is beneath an optional camera apparatus 160, the camera apparatus including a flash 166. The cover plate 300 has an exterior portion 304. The cover plate 300 can be made of a see-through material. Art work 308, which is located on the inner side of the cover plate 300, is visible through the cover plate 300. One or more retention features 302 which are attached to the cover plate are either hidden or camouflaged from view when the cover plate 300 resides within the base and the device 100 is in a closed configuration. Thus a method of shielding and retaining a battery or other device components within an electronic device 100 is disclosed herein.

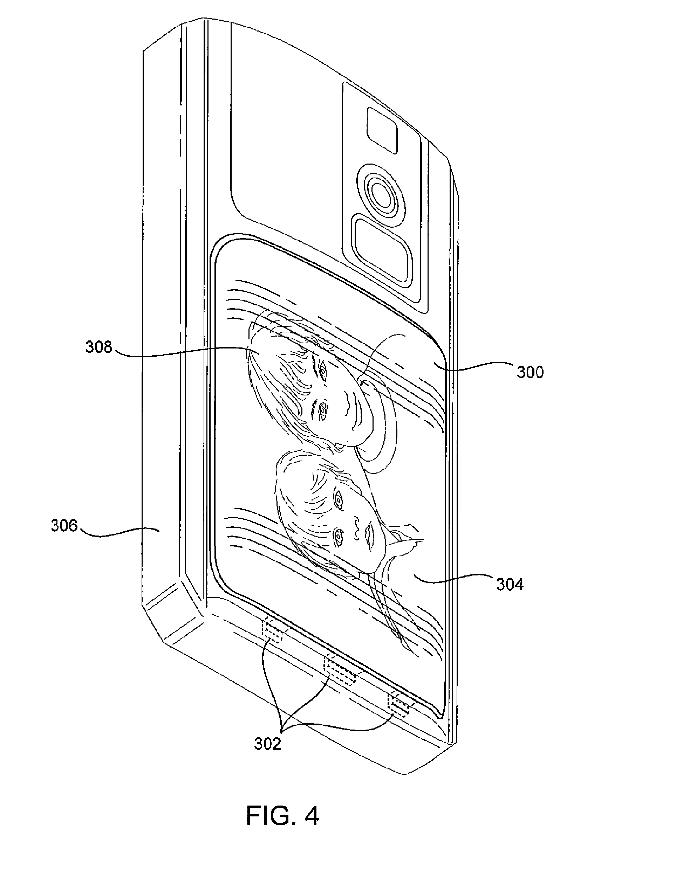

Figure 4 illustrates a perspective view of an electronic device 100 within the technology. A cover plate 300 resides within the base 306 of a device 100 such as a mobile phone. The cover plate 300 has an exterior portion 304. The cover plate 300 can be made of a transparent or translucent material. Art work 308, which is located on the inner side of the cover plate 300, is visible through the cover plate 300. One or more retention features 302 which are attached to the cover plate 300 are either hidden or camouflaged from view when the cover plate 300 resides within the base and the device 100 is in a closed configuration.

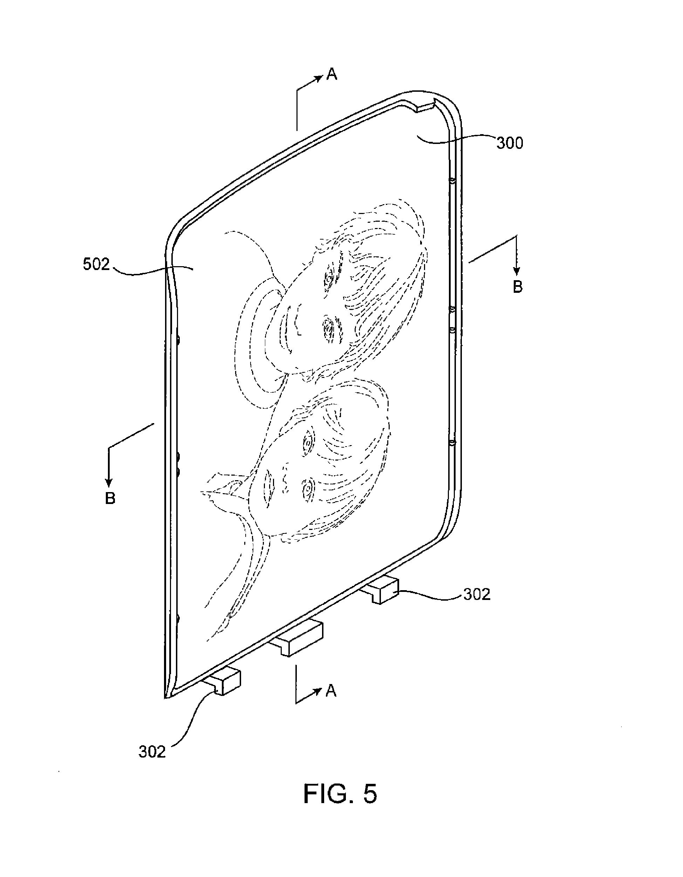

Figure 5 illustrates a fully assembled cover plate 300. A decoration portion is placed on the inner or second side of the cover plate 300. If the cover plate is see-through, the art work on the decoration portion can be visible through the outer side of the cover plate 300.

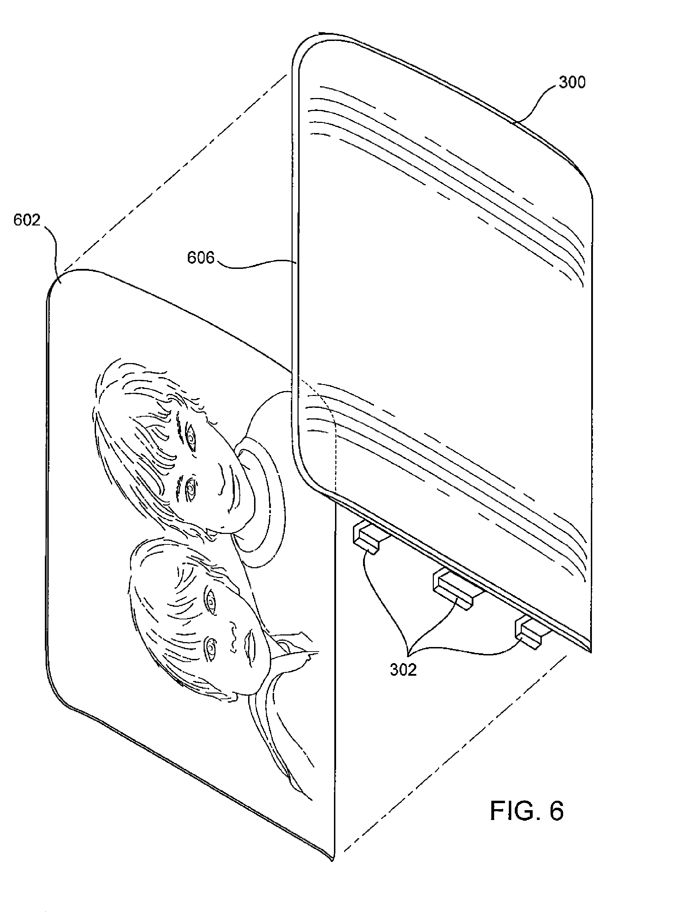

Figure 6 illustrates a decoration portion 602 bearing art work 308 in alignment with the cover plate 300 prior to affixing the decoration portion, which may be a plastic film or IML or other suitable structure, to the remainder of the cover plate 300. Retention features 302 are shown attached to a perimeter portion 606 as described above. As set forth previously, the perimeter portion including retention features 302, can be attached to the remainder of the cover plate 300 in a step separate from the placement of the decoration portion 602.

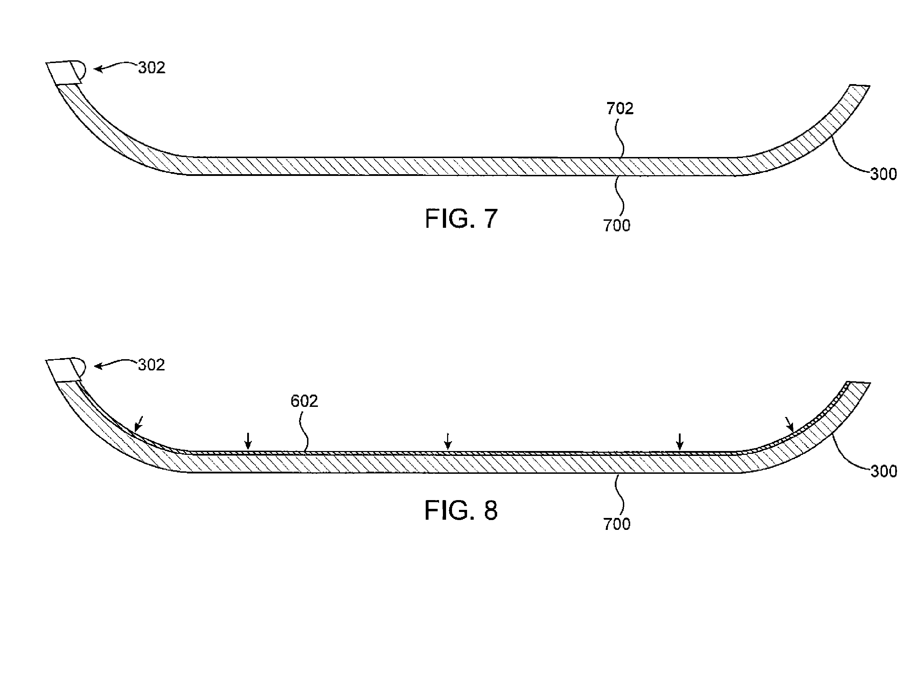

Figure 7 illustrates a cross-section AA of a cover plate 300 as illustrated in Figure 5. The cover plate 300 has an outer side 700 and an inner side 702 or second side 702. Retention features 302 are attached to the remainder of the cover plate 300.

Figure 8 illustrates a cross-section AA of a cover plate 300 as illustrated in Figure 5 once a decoration portion 602 is placed on the inner side of the cover plate 300.

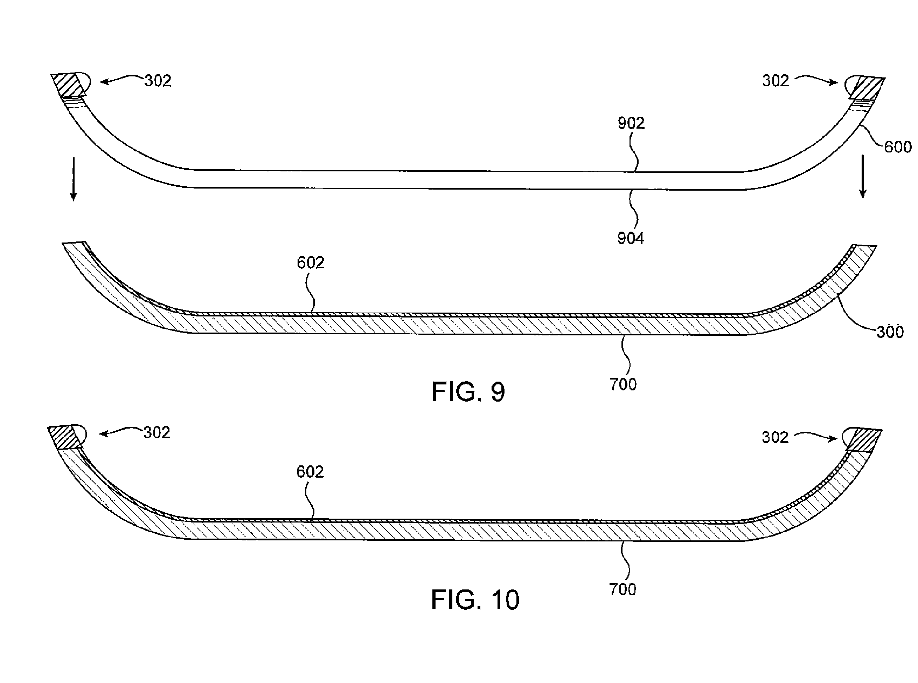

Figure 9 illustrates a cross-section AA of a cover plate 300 as illustrated in Figure 5 wherein a perimeter portion 606 bearing at least on retention feature 302 is attached to the remainder of cover plate 300 after a decoration portion 602 has been located on an inner side of a cover plate 300. The perimeter portion 606 has an inner side 902 and an outer side 904 in the same manner as the cover plate 300.

Figure 10 illustrates a cross-section AA of a cover plate as illustrated in Figure 5 after the perimeter portion 606 has been attached to the remainder of the cover plate. As set forth above, the art work 308 is visible through the outer surface 700 of the cover plate when the cover plate is constructed of a see-through material such as clear plastic. Thus retention features and a decoration portion can be joined to the remainder of the cover plate 300 without impairing the decorative quality of the image. Moreover, placing the art work 308 on a decoration portion within a clear cover plate 300 imbues the art work 308 with a glossy quality and protects the art work from damage during normal use of a device in which the cover plate 300 is used.

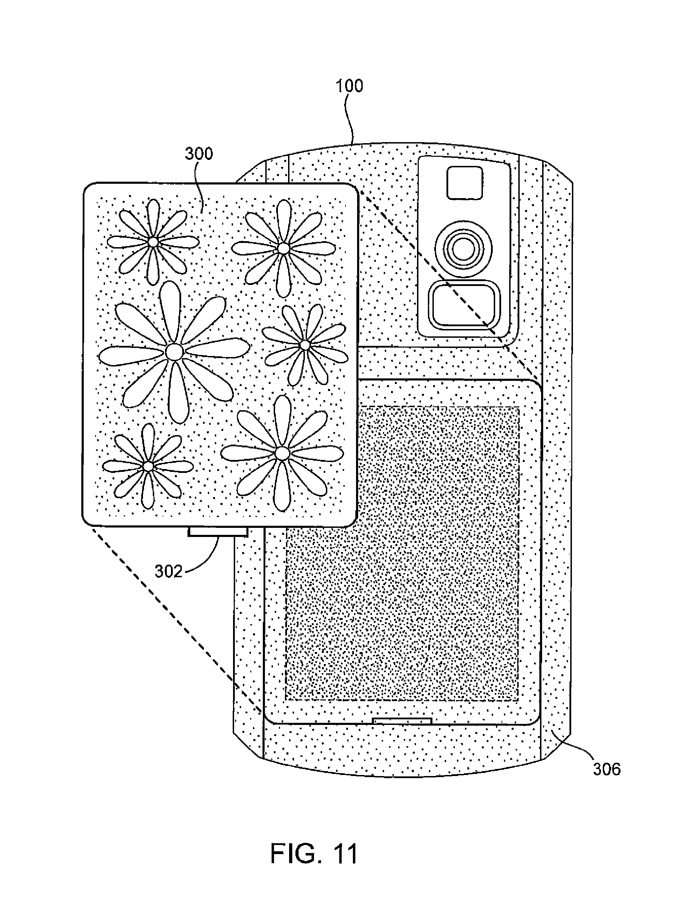

Figure 11 illustrates the alignment of a cover plate 300 with a base of a device 100. The device 100 and the cover plate 300 are configured such that when the cover plate 300 and the device 100 are placed in a closed configuration, shown for example in Figures 3 and 4, at least one retention feature 302 will not be visible from the outside of the device 100.

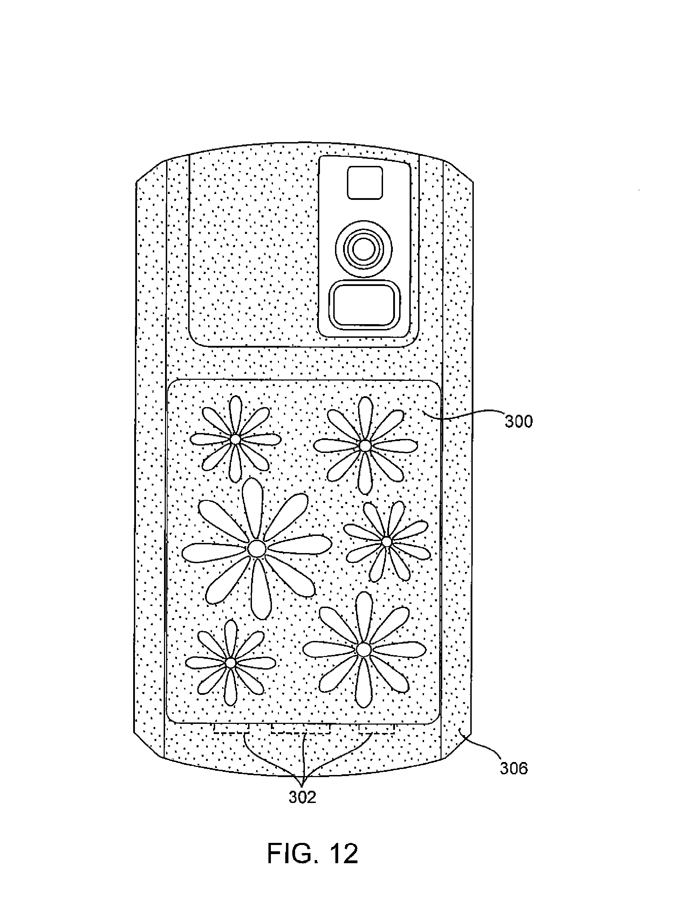

Figure 12 illustrates the cover plate 300 within the base 306. The art work on the inner side of the cover plate 300 is visible through the outer side of the cover plate 300.

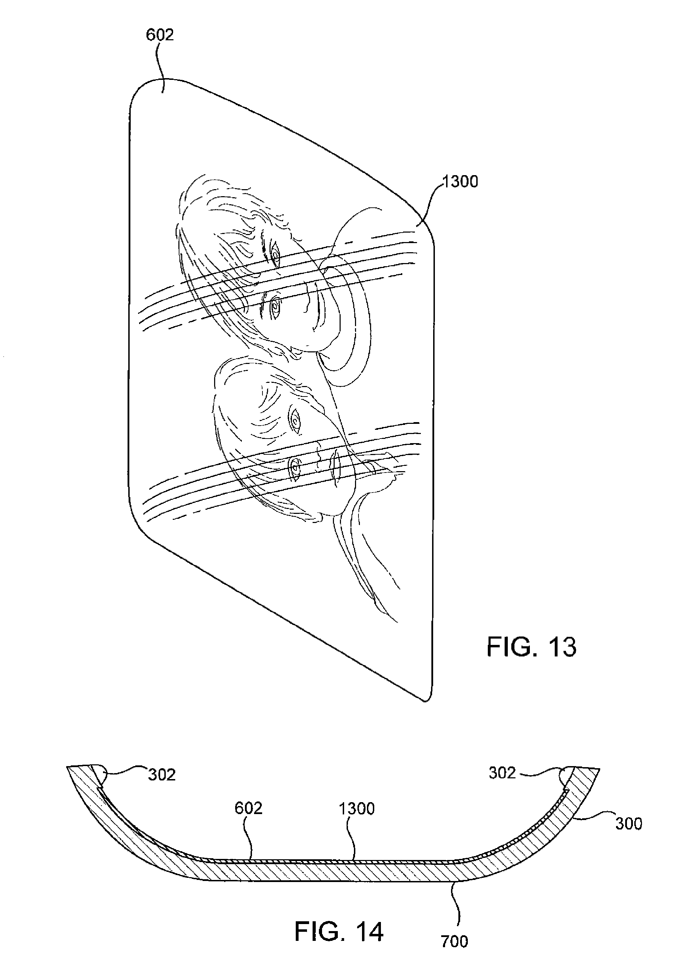

Figure 13 illustrates a perspective view of the inner side 1300 of the decoration portion 602. As stated above the decoration portion can be comprised of a plastic film or other suitable material.

Figure 14 illustrates a cross-section BB of a cover plate 300 as illustrated in Figure 5. The cover plate 300 has retention features 302 which are co-molded with the remainder of the cover plate 300. The decoration portion is located within the inner side of the cover plate 300. The inner side 1300 of the decoration portion 602 can face various interior device 100 components when the cover plate 300 is closed.

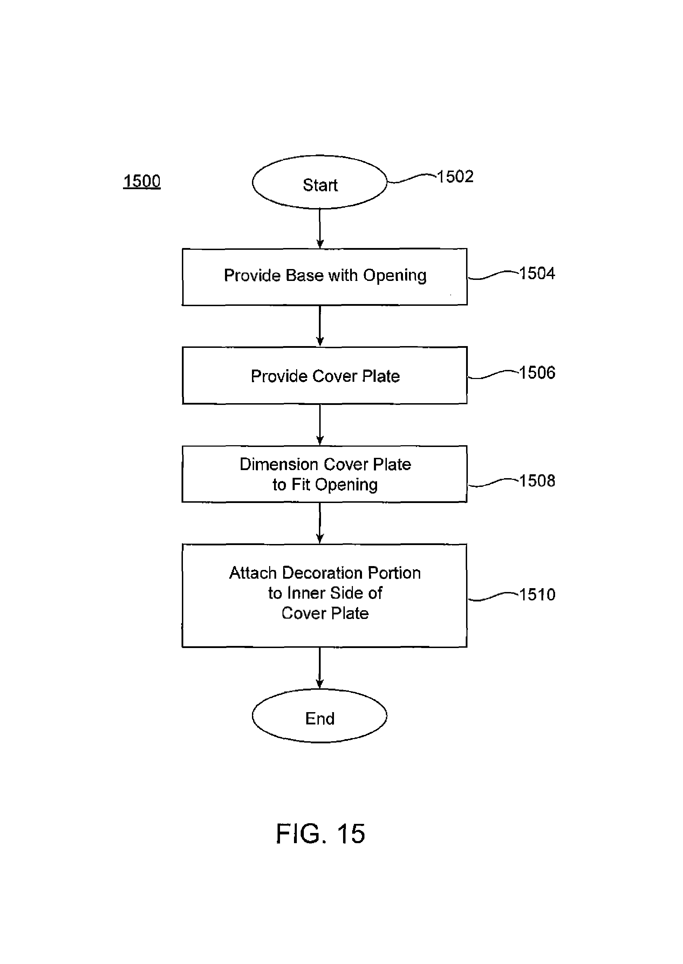

Figure 15 illustrates a method 1500 in accordance with the technology. The method involves providing a device with a base having an opening 1504 and providing a cover plate 1506 which can be constructed of a see-through material. The cover plate can be dimensioned to fit within the opening 1508. A decoration portion can be attached 1510 to an inner side of the cover plate. The method can also involve attaching a perimeter portion comprising one or more retention features to the cover plate. The perimeter portion can be co-molded with the cover plate and a decoration portion can be placed on the inner side of the cover plate in a step separate from attaching the perimeter portion to the remainder of the cover plate.

At least one implementation of the technology is an apparatus including a base forming an opening to a recess; a cover plate having an inner side, an outer side and a perimeter, the cover plate dimensioned to fit into the opening and being at least partially translucent and a decoration portion. The decoration portion is proximate the inner side of the cover plate and is at least partially visible through the outer side of the cover plate when the base and the cover plate are in a closed configuration.

At least one implementation of the technology is a cover plate having an inner side, an outer side and a perimeter. The cover plate, which can be partially or wholly transparent or translucent, can be dimensioned to fit into an opening of an electronic device, and being at least partially translucent. The cover plate comprises a decoration portion, the decoration portion being proximate or next to the inner side of the cover plate. A decoration on the decoration portion is at least partially visible through the outer side of the cover plate. The decoration on the decoration portion can thereby be given a glossy or shiny appearance as viewed from the outside of a device.

The implementations, examples and descriptions set forth above should in no way be considered as limiting the subject matter of the following claims.

## Claims

1. An apparatus comprising:
a base (306) forming an opening to a recess;
a cover plate (300) having an inner side (902), an outer side (904) and a perimeter (606), the cover plate (300) dimensioned to fit into the opening (1504) and being at least partially translucent; and
a decoration portion (602);
wherein the decoration portion (602) is proximate the inner side (902) of the cover plate (300) and is at least partially visible through the outer side (904) of the cover plate (300) when the base (306) and the cover plate (300) are in a closed configuration.

2. The apparatus of claim 1, wherein at least one retention feature is coupled to the cover plate (300).

3. The apparatus of any one of claims 1-2, further comprising a band portion proximate the perimeter (606) and surrounding the perimeter (606), the band portion including at least one retention feature.

4. The apparatus of any one of claims 1-3, wherein the decoration portion (602) is constructed of a transparent material.

5. The apparatus of claim 3, wherein the band portion is constructed of a transparent material.

6. The apparatus of claim 3, wherein the band portion is co-molded with the cover plate (300).

7. The apparatus of any one of claims 1-6, wherein the cover plate (300) is constructed of a translucent material.

8. The apparatus of claim 3, wherein the band portion is constructed of a translucent material.

9. The apparatus of any one of claims 1-6, wherein the decoration portion (602) bears an image.

10. The apparatus of any one of claims 1-9, wherein the decoration portion (602) is a plastic film.

11. A cover plate (300) comprising:
an inner side (902), an outer side (904) and a perimeter (606), the cover plate (300) dimensioned to fit into an opening (1504) of an electronic device, and being at least partially translucent; and
a decoration portion (602);
wherein the decoration portion (602) is proximate the inner side (902) of the cover plate (300) and is at least partially visible through the outer side (904) of the cover plate (300).

12. The cover plate (300) of claim 13, further comprising a band portion co-molded with the perimeter (606) and including at least one retention feature, wherein the decoration portion (602) plastic film bearing an image.

13. A method comprising:
providing a base (306) forming an opening (1504) to a recess;
providing a transparent cover plate (300) having an inner side (902), an outer side (904) and a perimeter (606), the cover plate (300) dimensioned to fit into the opening (1504) and being at least partially translucent;
providing a decoration portion (602) bearing a decoration; and
affixing the decoration portion (602) proximate the inner side (902) of the cover plate (300) such that the decoration is at least partially visible through the outer side (904) of the cover plate (300).

## Amended claims

### Amended claims in accordance with Rule 137(2) EPC.

**1.** The cover plate of claim 10, wherein the cover plate (300) comprises a part of an electronic device.

**2.** The cover plate (300) of claim 1, wherein the at least one retention feature is coupled to the cover plate (300).

**3.** The cover plate (300) of any one of claims 1-2, wherein the decoration portion (602) is constructed of a transparent material.

**4.** The cover plate (300) of claim 1, wherein the band portion is constructed of a transparent material.

**5.** The cover plate (300) of claim 1, wherein the band portion is co-molded with the cover plate (300).

**6.** The cover plate (300) of any one of claims 1-5, wherein the cover plate (300) is constructed of a translucent material.

**7.** The cover plate (300) of claim 1, wherein the band portion is constructed of a translucent material.

**8.** The cover plate (300) of any one of claims 1-5, wherein the decoration portion (602) bears an image.

**9.** The cover plate (300) of any one of claims 1-8, wherein the decoration portion (602) is a plastic film.

**10.** A cover plate (300) comprising:
an inner side (902), an outer side (904) and a perimeter (606), the cover plate (300) dimensioned to fit into an opening (1504) to a recess formed by a base of an electronic device, and being at least partially translucent;
a band portion proximate the perimeter (606) and surrounding the perimeter (606), the band portion including at least one retention feature;
and
a decoration portion (602);
wherein the decoration portion (602) is proximate the inner side (902) of the cover plate (300) and is at least partially visible through the outer side (904) of the cover plate (300).

**11.** The cover plate (300) of claim 10, wherein the band portion co-molded with the perimeter (606), wherein the decoration portion (602) plastic film bears an image.

**12.** A method comprising:
providing a transparent cover plate (300) having an inner side (902), an outer side (904) and a perimeter (606), the cover plate (300) dimensioned to fit into an opening (1504) to a recess formed by a base of an electronic device, and being at least partially translucent;
providing a band portion proximate the perimeter (606) and surrounding the perimeter (606), the band portion including at leas one retention feature;
providing a decoration portion (602) bearing a decoration; and
affixing the decoration portion (602) proximate the inner side (902) of the cover plate (300) such that the decoration is at least partially visible through the outer side (904) of the cover plate (300).
